# EUROPEAN PATENT SPECIFICATION

(11) **EP 2 975 312 B1**
(45) Date of publication and mention of the grant of the patent: **03.07.2019**
(21) Application number: 15176651.6
(22) Date of filing: 14.07.2015
(51) Int. Cl.: F16L 39/00, F28F 9/02, F28F 9/26, F28D 7/10, F28D 21/00

(54) **SYSTEM FOR COOLING A FLOW OR FOR EXTRACTING HEAT OUT OF A FLOW THROUGH A PIPELINE AND/OR FOR EXTRACTING HEAT OUT OF A SURROUNDING OF A PIPELINE**
KÜHLSYSTEM ZUM KÜHLEN EINES DURCHFLUSSES ODER ZUR ENTNAHME VON WÄRME AUS EINEM DURCHFLUSS DURCH EINE ROHRLEITUNG UND/ODER ZUR ENTNAHME VON WÄRME AUS EINER UMGEBUNG EINER ROHRLEITUNG
SYSTÈME DE REFROIDISSEMENT D'UN FLUX OU POUR EXTRAIRE LA CHALEUR D'UN FLUX DANS UN PIPELINE ET/OU POUR EXTRAIRE LA CHALEUR HORS DE L'ENVIRONNEMENT D'UN PIPELINE

(30) Priority: 14.07.2014 NL 1040885; 25.11.2014 NL 1041068
(43) Date of publication of application: 20.01.2016
(60) Divisional application: 17194210.5
(73) Proprietor: Wavin B.V., 8011 CW Zwolle (NL)
(72) Inventor: Roelfsema, Marcel, 9503 PB Stadskanaal (NL); Kanters, Arno F.C, 7701 XM Dedemsvaart (NL)
(74) Representative: Hoffmann Eitle

(56) References cited:
- WO-A1-94/16987
- WO-A1-2014/108562
- DE-A1- 2 537 924
- GB-A- 2 392 715
- US-A1- 2011 025 048

## Description

The invention relates to a system for cooling a flow or for extracting heat out of a flow through a pipeline and/or for extracting heat out of a surrounding of a pipeline. The disclosure also relates to a method for providing a system for cooling a flow or for extracting heat out of a flow through a pipeline and/or for extracting heat out of a surrounding of a pipeline. The disclosure also relates to a pipe section for use in such a system. The disclosure is further related to an adapter, also for use in such a system.

### Background of the invention

Systems for cooling a flow or for extracting heat out of a flow through a pipeline and/or for extracting heat out of a surrounding of a pipeline are generally known.

For instance, NL-8205037 discloses double-walled pipe sections for recovering heat from the soil. The double-walled pipe sections can be connected by a joint having interior and exterior sleeves. The sleeves are positioned over the double-walled pipe sections and can be attached thereto by using for example an adhesive.

US 4,017,102 discloses a system to aid in maintaining a fluid flowing through a pipeline at a desired temperature at locations where two pipes are interconnected by a coupling. A jacket is provided which substantially surrounds and encloses the coupling and through which jacket a temperature controlling fluid is circulated in heat transferring relation to the coupling.

Each of these systems are fairly complicated systems, which do not allow for quick installation and are also not very responsive to an alternative local arrangement which may differ from an arrangement provided elsewhere along the pipeline.

Further, US 2011/025048 A1 discloses a transition coupling system for use with a dual containment pipe which includes an inner primary pipe and an outer secondary pipe with an interstitial space therebetween. The transition coupling includes an inner body configured to engage an inner surface of the primary pipe and an outer body configured to engage an outer surface of the secondary pipe. The outer body includes at least two releasably attachable portions, at least one of which is movable relative to the other in a radial direction thereof. The inner body and the outer body are configured to define a gap therebetween when coupled to the piping system such that the gap is generally sealed and in communication with the interstitial space.

WO94/16987 A discloses a double containment piping system for securing a primary pipeline in position within and enabling pressure testing of a surrounding secondary pipeline which interconnects two or more sump chambers. Centralization seals are affixed to the interior surface of opposite ends of the secondary pipeline and to an adjacent exterior surface of the primary pipeline to form an airtight wall and seal the space between these surfaces. An air insertion fitting allows pressure testing of the sealed spaces between the primary and secondary pipelines. Air bridge hoses can interconnect air insertion fittings within a sump chamber to permit simultaneous pressure testing of more than one secondary pipeline in the secondary pipeline system. The seals further provide a centralization function to limit the radial movement of a primary pipeline within a secondary pipeline to reduce the risk of impact damage caused by pressure spikes in the primary pipeline system.

GB 2 392 715 A discloses a fitting for a secondary containment pipeline comprising; at least two open end portions each configured to receive an end of a secondary pipe, of a secondary containment pipeline, a body portion, narrower than the end portions, configured to receive ends of primary pipes of a secondary containment pipeline and at least two stepped portions extending between the body portion and each end portion of the fitting, at least two of the at least two stepped portions being provided with a port, extending from an inner surface to an outer surface of the fitting for connecting with a bypass conduit. The fitting may comprise a unitary piece or may be comprises of a plurality of component pieces connected for the purpose of providing a join or bend between adjacent lengths of the secondary containment pipeline.

### Object of the invention

It is an object of the present invention to provide a system for cooling a flow or for extracting heat of a flow through a pipeline and/or for extracting heat out of a surrounding of a pipeline that can quickly locally be installed and that is somewhat responsive to a local situation that differs from situations at other positions along the pipeline, including other positions where pipe-sections are connected.

It is an object of another aspect of the invention to provide a system for cooling a flow or for extracting heat out of a surrounding of a pipeline that would allow for connecting another (smaller) pipeline that branches-off from the (main) pipeline.

### Summary of the invention

A system according to the present invention is defined by the combination of features of claim 1. Dependent claims relate to preferred embodiments. According to an embodiment, the system comprises: at least two pipe sections for forming a part of the pipeline. Each pipe section has a wall defining a lumen and a lumen direction. The wall has attached to or as part of the wall a plurality of hollow sections extending in the lumen direction for conducting a fluid. The system further comprises a coupler for coupling the two pipes sections. The system also provides a fluid connector for providing a fluid communication between at least one hollow section of the plurality of hollow sections of one of the two pipe sections and at least one hollow section of the plurality of hollow sections of the other one of the two pipe sections. The coupler and the fluid connector are in a fully unassembled condition of the system mutually separated and unconnected parts of the system, therewith allowing for sequentially installing the coupler and the connector during assembling of the system. The fluid connector is arranged to flexibly adopt a shape between connections of the connector with the two pipe sections during assembling of the system.

Advantageously, during installation it will be possible to for instance first couple the two pipe sections to then put the fluid connector into place and connect the hollow sections of the two pipe sections. However, it is equally possible to do this the other way round.

Furthermore, flexibility as to the shape which the fluid connector adopts between connections of the connector with the two pipe sections during assembling of the system, allows for flexibly responding to different local circumstances or desires. For instance, when the pipe sections as connected will extend through a relatively small hole in for instance a wall of a foundation, then it is possible to apply the fluid connector parallel to the pipeline sections and as close as possible to the pipe sections. It is even not inconceivable that the fluid connector extends partly through the lumen provided by the connected pipe sections. However, if this is for whatever reasons not possible, or not desirable, then it is equally possible to let the fluid connector take a much larger "bypass" such that at least a part of it extends at a much larger radial distance from the connected pipe sections along the pipe sections. This could for instance allow for bypassing a tight hole in a foundation wall through which only the connected pipe sections fit.

The flexibility to adopt a shape also allows for incorporating in the fluid connector an air vent, heat exchanging equipment, a pump, etc.

Connections of the connector with the two pipe sections may be direct connections, or connections which make use of a part in-between the pipe section and the fluid connector. Such a part may for instance be an adapter, as discussed below.

An embodiment of a system according to the invention further allows for first coupling the two pipe sections and secondly connecting the at least one hollow section of one of the two pipe sections with at least one hollow section of the other one of the two pipe sections.

An embodiment of a system according to the invention may, additionally, or alternatively further allow for first connecting the at least one hollow section of one of the two pipe sections with at least one hollow section of the other one of the two pipe sections and secondly coupling the two pipe sections. It is for instance possible that equipment, such as filters, heat exchangers, pumps etc., through which the fluid running through the fluid connector flows, is installed before the actual pipe sections are laid down. Then, that equipment and parts of the fluid connector can already be put in place, so that only the connection with the pipe sections remains to be done.

First connecting the one or more hollow sections of different pipe sections will also need to take place when the fluid connector extends within the lumen of the pipeline.

In an embodiment of a system according to the invention the fluid connector comprises a flexible pipe. These are widely available, easily cut to size, and arranged to flexibly adopt a shape.

In an embodiment of a system according to the invention at least one of the two pipe sections is along at least a part of its circumference provided with a recess for discharge or supply of the fluid into one or more of the at least one hollow sections. The recess may have the shape of a slit. Accordingly, the axial position of the connection with the fluid connector is then easily provided. The slit may have edges which are rounded off or chamfered, allowing for sliding movement of parts of the system along these edges without providing points at which such sliding movements can lead to damage of parts, such as sealing rings, by being pressed along sharp edges of the slit. Additionally, it will be unlikely that any burrs will block the sliding movement. The possible need for a relative sliding movement of parts along the wall of the pipe section will become clear in the more detailed description.

The recess is situated at the outer side of the wall.

According to the invention, the recess extends over at most a part of the outer circumference of the respective pipe section, wherein that recess is free from a fluid communication with a hollow section that has a circumferential position outside the part of the circumference over which the recess extends. With such an embodiment it will be possible to let the fluid only run through a selected number of the hollow sections within the wall of a pipe section, so that a part of the circumference of that hollow pipe section remains available for installing a branch pipe section. Given that the fluid connector is arranged to flexibly adopt a shape between connections of the fluid connector with the two pipe sections, it will also be possible to have at one side of a connection between pipe sections fluid running through the hollow sections in a first circumferential part of that pipe section and to have that fluid at the other side of the connection between the pipe sections running through hollow sections in a second circumferential part of the respective pipe section. The first and second circumferential parts can have different positions along the circumferences of the pipe sections and may for instance be diametrically opposite each other. This allows for installation of a branch pipe section on one side of the connection between the pipe sections branching off in a totally different direction than the direction into which a branch pipe section in a pipe section at the other side of the connection between the pipe sections branches off.

In an embodiment of a system according to the invention the system comprises at least one adapter for surrounding the recess in a sealed way and for providing a port for connecting a part of the fluid connector for a flow of a fluid downstream from, or upstream to, at least one hollow section of one of the pipe sections. The adapter may be ring-shaped and for instance comprise at least two ring segments which are separable or connected via a hinge. The adapter may have a shape which comprises at most a part of a ring.

The adapter is provided with an opening positioned such, and extending in a direction such, that in an assembled condition of the system at least one hollow section has via the recess a fluid communication with the opening.

If it is desired to have only a selected number of hollow sections having a fluid running through them and having a fluid communication with the opening, then this is in principle possible by controlling the length of the recess in circumferential direction, or by controlling the length in circumferential direction of the opening in the adapter, or both.

The disclosure provides according to another aspect a system for cooling a flow or for extracting heat out of a flow through a pipeline and/or for extracting heat out of a surrounding of a pipeline. The system comprises at least two pipe sections for forming a part of the pipeline. Each pipe section has a wall defining a lumen and a lumen direction. The wall having attached to a part of the wall at least one hollow section extending in the fluid direction for conducting a fluid. The system further comprises a fluid connector for providing a fluid communication between at least one hollow section of the other one of the two pipe sections. The coupler and the fluid connector are in a fully unassembled condition of the system mutually separated and unconnected parts of the system therewith allowing for sequentially installing the coupler of the system and the connector during assembling. The system is arranged so that when the two-pipe sections are coupled and a flow of fluid is introduced in a selection of the at least one hollow section of one of the two pipe sections that flow of the cooling fluid can via the fluid connector be introduced in a selection of the at least one hollow section of the other one of the two pipe sections.

The disclosure also provides a method for providing a system for cooling a flow or for extracting heat out of a flow through a pipeline and/or for extracting heat out of the surrounding of a pipeline. The method comprises providing at least two pipe sections for forming a part of the pipeline, each pipe section having a wall defining a lumen and a lumen direction. The wall has attached to or as part of the wall at least one hollow section extending in the lumen direction for conducting a fluid. The method further comprises providing a coupler for coupling the two pipe sections. The method further comprises providing a fluid connector for providing a fluid communication between at least one hollow section of one of the pipe sections and at least one hollow section of the other one of the two pipe sections. The coupler and the fluid connector are in a fully unassembled condition of the system mutually separated and unconnected parts of the system. The method also comprises sequentially installing the coupler and the connector during assembling of the system wherein the fluid connector flexibly adopts a shape between connections of the connector with the two pipe sections during assembling of the system.

Method for providing a system for cooling a flow or for extracting heat out of a flow through a pipeline and/or for extracting heat out of a surrounding of a pipeline, wherein the method comprises: providing at least two pipe sections for forming a part of the pipeline, each pipe section having a wall defining a lumen and a lumen direction, the wall having attached to or as part of the wall at least one hollow section extending in the lumen direction for conducting a fluid; providing a coupler for coupling the two pipe sections; providing a fluid connector for providing a fluid communication between at least one hollow section of one of the two pipe sections and at least one hollow section of the other one of the two pipe sections, the coupler and the fluid connector are in a fully unassembled condition of the system mutually separated and unconnected parts of the system; sequentially installing the coupler and the connector during assembling of the system; installing the system so that when the two pipe sections are coupled and a flow of fluid is introduced in a selection of the at least one hollow section of one of the two pipe sections that flow of the cooling fluid is via the fluid connector introduced in a selection of the at least one hollow section of the other one of the two pipe sections.

The disclosure also provides a pipe section having a wall defining a lumen and a lumen direction. The wall having attached to or as part of the wall at least one hollow section extending in the lumen direction for conducting a fluid. The pipe section is along at least a part of its circumference provided with a recess for discharge or supply of the fluid into one or more of the at least one hollow sections.

The disclosure further provides an adapter for surrounding a recess in a pipe section having a wall defining a lumen and a lumen direction, the wall having attached to a part of the wall at least one hollow section extending in the fluid direction for conducting a fluid. The recess is provided along at least a part of a circumference of the pipe section and is for discharge or supply of the fluid into one or more of the at least one hollow sections. The adapter is arranged to surround the recess in a sealed way. The adapter is provided with a port for connecting a part of a fluid connector for a flow of a fluid downstream, or upstream to, at least one hollow section of one of the pipe sections.

The invention will further be explained with the aid of a drawing, in which:
Fig. 1 shows schematically an embodiment of a system according to the invention;
Fig. 2 shows schematically in a semi-exploded view an embodiment of a system according to the invention;
Fig. 3 shows schematically, in more detail, in a semi-exploded view, parts of an embodiment of a system according to the invention;

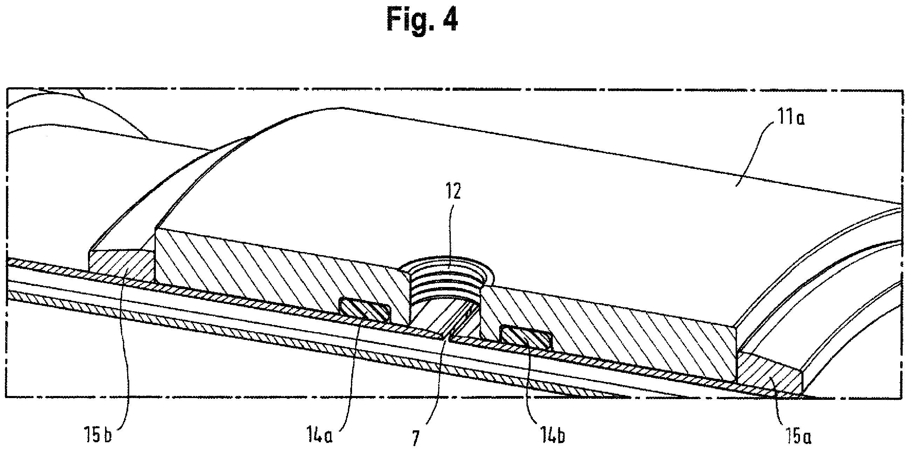

Fig. 4 shows schematically, in more detail, in a semi-exploded view, parts of an embodiment of a system according to the invention; and

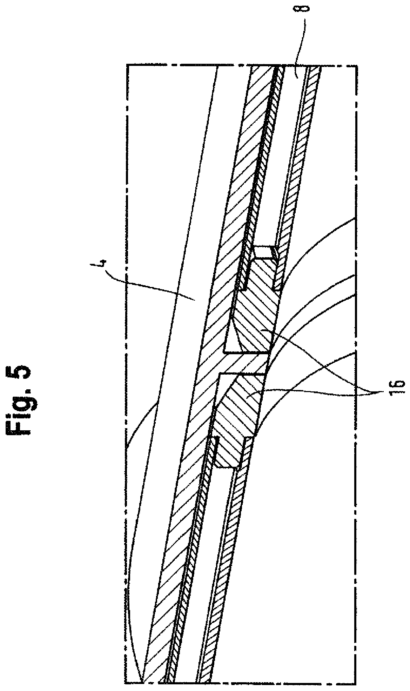

Fig. 5 shows schematically, in more detail, in a semi-exploded view, parts of an embodiment of a system according to the invention.

In the drawing, like parts are provided with like references.

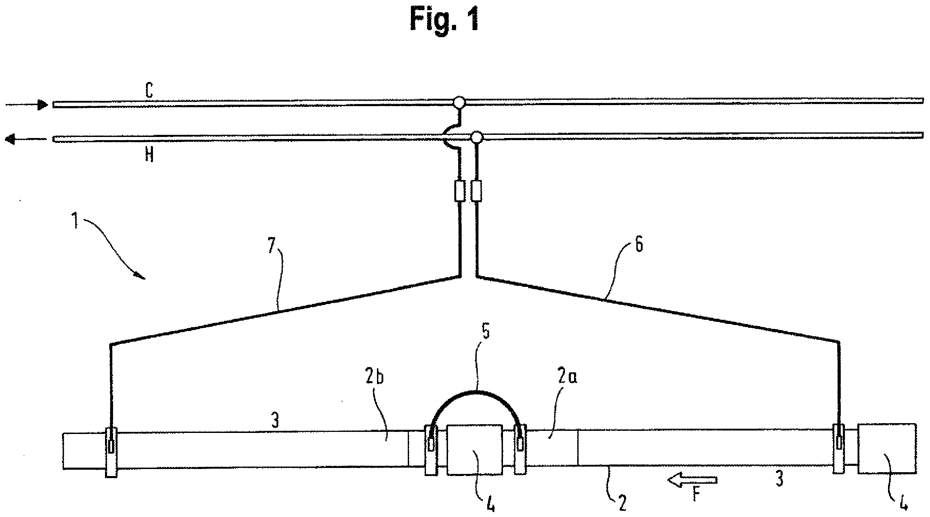

Fig. 1 shows a system 1 for cooling a flow or for extracting heat out of the flow through a pipeline 2 and/or for extracting heat out of a surrounding 3 of a pipeline 2. Through the pipeline 2 could for instance flow sewage or industrial discharge of a relatively high temperature in the direction indicated by arrow F. However, it is also possible that the surrounding 3 of pipeline 2 is relatively warm and that, for instance relatively cold water runs through the pipeline in the direction indicated by arrow F, or the opposite direction. As shown, the system comprises at least two pipe sections 2a, 2b for forming a part of the pipeline 2. Although not visible in Fig. 1, each pipe section 2 has a wall defining a lumen and a lumen direction. The wall has attached to, or has as part of, the wall at least one hollow section extending in the lumen direction for conducting a fluid. Such a pipe section may be as shown in NL-8205037, Fig. 1.

A suitable pipe which can be used as pipe section in an embodiment according to the invention, is the so-called "WAVIHOL" pipe, as commercially available from the Applicant. The pipe section 2, although shown straight, may also have a bend, for instance one of 90°. The one or more hollow sections will, in any case, extend in a direction corresponding to the lumen direction. The one or more hollow sections will usually extend parallel to the center line of the respective pipe section. However, it is not impossible to use in a system according to the invention a pipe section in which the one or more hollow sections extend in the lumen direction for instance by spiraling around the center line of the respective pipe section. Preferably, each hollow section has an identical cross-section.

The system further comprises a coupler 4 for coupling the two pipe sections 2a and 2b. Such a coupler may for instance be a double-socket coupler, as well-known in the art.

The system further comprises a fluid connector 5 for providing a fluid communication between at least one hollow section of one of the pipe sections 2a and at least one hollow section of the other one of the two pipe sections 2b. The coupler 4 and the fluid connector 5 are in a fully unassembled condition of the system mutually separated and unconnected parts of the system, so as to allow for sequentially installing the coupler 4 and the connector 5 during assembling of the system.

The fluid connector 5 is arranged to flexibly adopt a shape between connections of the connector 5 with the two pipe sections 2a, 2b during assembling of the system. The fluid connector 5 may comprise a flexible pipe, such as for instance of polyethelene. As can easily be derived from the schematic drawing, particularly Fig. 1, the system allows for first coupling the two pipe sections 2a, 2b and secondly connecting the at least one hollow section of one of the two pipe sections 2a with at least one hollow section of the other one of the two pipe sections 2b. However, it is equally possible to have embodiments which allow for first connecting the at least one hollow section of one of the two pipe sections 2a with at least one hollow section of the other one of the two pipe sections 2b and secondly coupling the two pipe sections 2a, 2b. For such an embodiment it may be necessary that the fluid connector comprises a relatively long flexible pipe. Such a pipe can easily adopt a shape so that assembling is facilitated. The connections with the wall of the respective pipe sections will then be within the respective pipe sections.

Fig. 1 further shows that it is possible to have upstream from the flow through the pipeline 2 another connection with a fluid line 6, for instance to discharge relatively warm fluid from one or more of the hollow sections in the wall pipe section 2a. This fluid line 6 may be connected up with a pipe system H for hot fluids. The fluid may be water. Similarly, downstream a flow through pipeline 2 there may be a connection for a fluid line 7 for supply of a relatively cold fluid into the hollow sections of pipe section 2b. The relatively cold fluid may be provided by a cold fluid pipe system C.

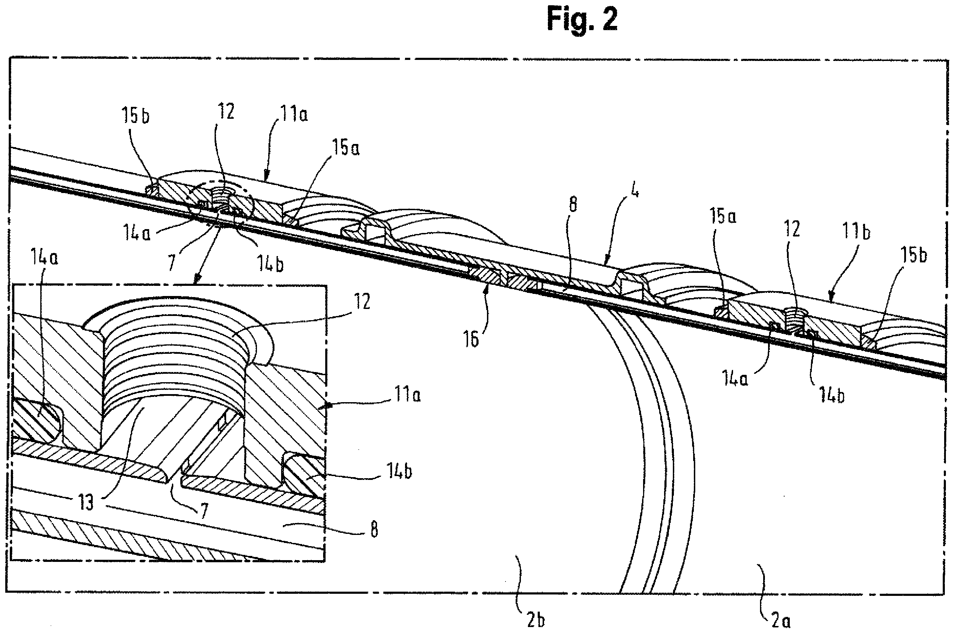

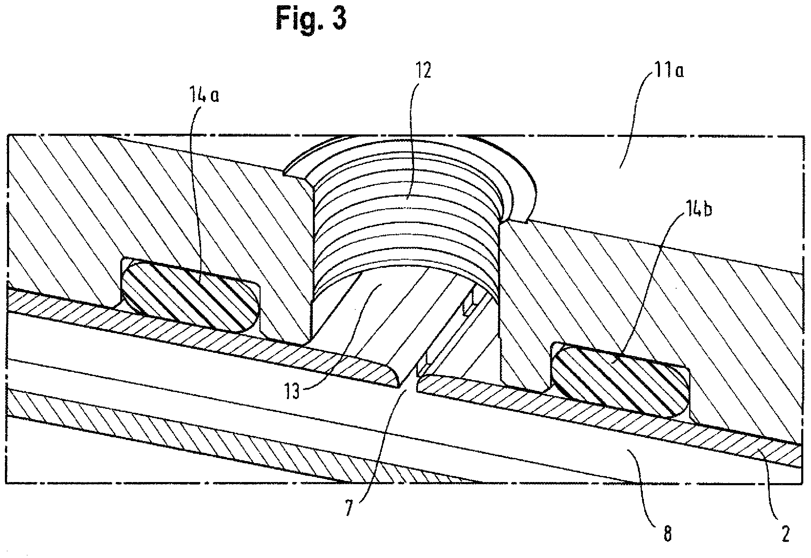

Turning now to Fig. 2, two pipe sections 2a, 2b are shown as connected up. The view presented is the one which corresponds to such connected pipe sections 2a, 2b as cut open in axial direction. For the moment the focus of the description is on the insert which shows a part of one of the pipe sections 2b as magnified. The insert is better shown in Fig. 3. It is shown that along at least a part of its circumference the pipe section is provided with a recess 7 for discharge or supply of the fluid into one or more of the at least one hollow sections 8. Preferably the recess has the shape of a slit. The slit has edges which preferably are rounded are off or chamfered. It is shown that a recess is, as shown, situated at the outer side of the wall. According to the invention the recess 7 extends over at most a part of the outer circumference of the respective pipe section. Note that the recess will then be free from a fluid communication with a hollow section 8 that has a circumferential position outside the part of the circumference over which the recess 7 extends.

As shown in Fig. 2, the system further comprises an adapter 11a, 11b for surrounding the recess 7 in a sealed way and for providing a port 12 for connecting a part of the fluid connector 5 for flow of a fluid downstream from, or upstream to, at least one hollow section 8 of one of the pipe sections 2a, 2b. The adaptor 11a, 11b may be ring-shaped. The adapter may comprise at least two ring segments, which are separable of connected via a hinge. However, in an alternative embodiment the adapter has a shape which comprises at most a part of the ring. The adapter provides additional stiffness, ring-stiffness, in a number of embodiments, around the recessed area. The adapter also improves the impact resistance of the respective pipe section at a position where the recess would otherwise have weakened the impact resistance.

The adapter 11a, 11b is provided with an opening 13 positioned such, and extending in a direction such, that in an assembled condition of the system at most a selected number of hollow sections 8 of the at least one hollow section 2a, 2b can have a fluid communication with the opening 13. The opening 13 may be slit-shaped and may have an annular shape. Slit-shaped opening 13 may, alternatively, have a shape which comprises at most a part of an annulus. In a very advanced embodiment, the length of the slit-shaped opening may be adjustable.

The adapter 11a, 11b is preferably provided with one or more sealing rings 14a, 14b for abutting a pipe section 2a, 2b so that in an assembled condition of the system the opening 13 and the recess 7 is fully enclosed by one or more sealing rings 14a, 14b. Further, the adapter 11a, 11b is preferably provided with a conduit structure (not shown) which provides in an assembled condition of the system a fluid communication between the recess 7 it surrounds and the port 12 for connecting a part of the fluid connector 5 for a flow of the fluid downstream from, or upstream to, at least one hollow section 8 of one of the pipe sections 2a, 2b. Accordingly, the adapter may in use distribute a fluid over a number of hollow sections, or collect a fluid from a number of hollow sections.

According to another aspect of the disclosure, it is also possible that the fluid connector is arranged to flexibly adopt a shape during assembling of the system, but it is not needed that the fluid connector is arranged to flexibly adopt a shape during assembling of the system. For this aspect of the invention, the system is arranged so that when the two pipe sections are coupled and a flow of fluid is introduced in a selection of the at least one hollow section of one of the two pipe sections, that flow of the cooling fluid can via the fluid connector be introduced in a selection of the at least one hollow section of the other one of the two pipe sections.

System 1 may further be provided with a fixation assembly 15a, 15b for fixating a position of the adapter 11a, 11b at one of the two pipe sections 2a, 2b. The fixation assembly 15 may be part of the adapter 11a, 11b. In such an embodiment, it is further preferably that the fixation assembly 15 comprises a part (not shown) for extending into the recess 7 in an assembled condition of the system. Such a part could fix the adapter at a position of the section 2a, 2b by blocking movement of the adapter in circumferential direction and/or in axial direction of the pipe sections 2a, 2b. In the embodiment shown in the drawing, the fixation assembly 15 comprises two rings 15a, 15b fixed or fixable to the respective pipe sections 2a, 2b for locking in the adapter 11a, 11b. The ring may be such that it can be put in a position on the respective pipe section 2a, 2b by bringing the ring 15a, 15b from an open condition into a closed condition. This may be advantageous in a situation wherein the pipe sections are already connected and the recess 7, adapters 11a, 11b, and fluid connector 5 still need to be put in place.

However, it is also possible that the rings are fully closed in itself, slidable over (or within) the respective pipe section, and fixable, for instance, by adhesives, at a position suitable for fixing the position of the adapter 4.

Preferably, the rings 15a, 15b have a chamfered or rounded-off ring edge so as to provide in an assembled condition of the system along the lumen direction a gradual transition in radius from a part of a respective pipe section 2a, 2b to the adapter 11a, 11b. The rings 15a, 15b are preferably of a material that is similar to the material of the adapter 11a, 11b, for the same reasons.

Preferably, the system comprises for each hollow section 8 at least one plug element 16 for ensuring that one end of the respective hollow section 8 is closed off by insertion of the plug element 16 in that end. The plug element 16 may be an integral part of the coupler, however it is more preferable that the plug element 16 is a part of an individual part of the system, therewith allowing for sequentially inserting the plug element 16 and the coupler 3 during assembling of the system. Preferably, each of the at least one plug element 16 is part of a ring element. Particularly in the situation in which the plug element is not a part of the coupler 3, each plug element is preferably shaped such that in inserted condition a part protruding out of the end of the hollow section is rounded off or chamfered. Preferably, that part protruding out of the end of hollow section 8, is nose-shaped. This is particularly advantageous when parts need to be slid over the end of the pipe, such as for instance fixation rings and/or an adapter (having O-rings), during manufacturing of a pipe-section ready for coupling with another pipe section and ready for connecting the fluid connector. The plug-elements are intended to watertightly close-off the end of a hollow section, without changing its geometry and without reducing its stiffness. The shape aims to reduce pushing forces needed when parts of the system need to be slid over the end of the pipe-section. The plug-elements further aim to improve the ring-stiffness at the end of the pipe-section, and to improve local impact resistance.

It is envisaged that the system is delivered on the site of installation in the following condition. The pipe sections are each provided with the recess, with the adapter and with the fixing assembly. Coupler 4 and the fluid connector 5 are provided as separate parts, separate from each other and separate from the pipe sections. The part of the adapter can be easily connected up with the fluid connector. Such a connector between an end of the fluid connector, particularly when this is in a flexible pipe, and a port 12 of the adapter 11a, 11b, can be designed in many different ways as well known in the art. Then it may only be a matter of "plug and play" at the installation site.

Now a method for providing a system for cooling a flow or for extracting heat out of a flow through a pipeline 2 and/or for extracting heat out of a surrounding of a pipeline 2 is discussed.

The method comprises providing at least two pipe sections 2a, 2b for forming a part of the pipeline 2. Each pipe section 2a, 2b has a wall defining a lumen in a lumen direction. The wall has attached to or as part of the wall at least one hollow section 8 extending in the lumen direction for conducting a fluid. The method further comprises providing a coupler 4 for coupling the two pipe sections 2a, 2b. The method also comprises providing a fluid connector 5 for providing a fluid communication between at least one hollow section 8 of one of the two pipe sections and at least one hollow section 8 of the other one of the two pipe sections 2a, 2b. The coupler 4 and the fluid connector 5 are in a fully unassembled condition of the system mutually separated and unconnected parts of the system. The method further comprises sequentially installing the coupler 4 and the connector 5 during assembly of the system wherein the fluid connector 5 flexibly adopts a shape between connections 5 of the connector with the two pipe sections 2a, 2b during assembling of the system.

Preferably, an entire central part of the fluid connector 5 between connections of the fluid connector 5 with the two pipe sections 2a, 2b is during assembling of the system arranged to flexibly adopt a shape.

The method may comprise first coupling the two pipe sections 2a, 2b and secondly connecting the at least one hollow section 8 of one of the two pipe sections 2a, 2b with at least one hollow section of the other one of the two pipe sections 2a, 2b. However, as an alternative, the method may comprise first connecting the at least one hollow section 8 of one of the two pipe sections 2a, 2b with at least one hollow section 8 of the other one of the two pipe sections 2a, 2b and secondly coupling the two pipe sections 2a, 2b.

The fluid connector 5 may comprise a flexible pipe. The method may further comprise providing in at least one of the two pipe sections 2a, 2b along at least a part of its circumference a recess 7 for discharge or supply of the fluid into one or more of the at least one hollow sections 8. The recess 7 may be provided such that it has the shape of a slit. The recess may also be provided such that the slit has edges which are rounded off or chamfered. The recess 7 is provided at the outer side of the wall. The recess 7 is according to the invention provided such that it extends over most of the part of the outer circumference of the respective pipe section 2a, 2b and such that the recess 7 is free from a fluid communication with a hollow section that has a circumferential position outside the part of the circumference over which the recess 7 extends.

The method may further comprise providing at least one adapter 11a, 11b for surrounding the recess 7 in a sealed way and for providing a port 12 for connecting a part of the fluid connector 5 for a flow of a liquid downstream from, or upstream to, at least one hollow section 8 of one of the pipe sections 2a, 2b. The adapter 11a, 11b may be ring-shaped and may comprise at least two ring segments, which may be separable or connected via a hinge. The adapter 11a, 11b may also have a shape which comprises at most a part of a ring.

The method may further comprise providing the adapter 11a, 11b with an opening 13 and wherein the method comprises positioning the opening 13 such that it extends in a direction so that in an assembled condition of the system at least one hollow section can have a fluid communication with the opening 13 via the recess 7. However, the method may alternatively comprise providing the adapter 11a, 11b with an opening 13 positioned such that it extends in a direction so that in an assembled condition of the system at most a selected number of hollow sections 8 of the at least one hollow section 8 can have a fluid communication with the opening 13. The opening 13 may be provided such that it is slit-shaped. The slit-shaped opening may be provided such it has an annulus shape. The slit-shaped opening 13 may further be such that it has a shape which comprises at most a part of an annulus. The length of the slit opening may be adjustable.

The adapter 11a, 11b may be provided with at least one sealing ring 14a, 14b for abutting the pipe section, so that in an assembled condition of the system the opening and the recess is fully enclosed by one or more sealing rings. The adapter 11a, 11b may be provided with a conduit structure (not shown) positioned such that in an assembled condition of the system a fluid communication between the recess 7 it surrounds and a port 12 for connecting a part of the fluid connector for a flow of the fluid downstream from, or upstream to, at least one hollow section of one of the pipe sections 2a, 2b is provided.

The method may further comprise providing a fixation assembly 15 and fixating using the fixation a position of the adapter 11a, 11b as one of the two pipe sections 2a, 2b so that the adapter 11a, 11b surrounds a recess 7. The fixation assembly may be part of the adapter 11a, 11b. The fixation assembly may comprise a part for extending into the recess in an assembled condition of the system. The fixation assembly may be used for fixating a position of the adapter 11a, 11b with respect to a lumen direction of the respective pipe section. The fixation assembly may comprise two rings 15a, 15b fixed or fixable to the respective pipe section for locking in the adapter. At least one of the rings 15a, 15b may be put in a position on the respective pipe section 2a, 2b by bringing the ring 15a, 15b from an open condition into a closed condition. At least one of the rings 15a, 15b may have a chamfered or rounded-off ring edge to provide along the lumen direction for a gradual transition a radius from a part of a respective pipe section to the adapter.

The method may further comprise providing for each hollow section 8 at least one plug element 15a, 15b and ensuring that one end of the respective hollow section 8 is closed off by inserting a plug element in that end. The plug element 15a, 15b may be an integral part of the coupler 4. The plug element may, alternatively, be part of an individual part of the system therewith allowing for sequentially inserting the plug element 15a, 15b and coupler 4 during assembling the system. Preferably, the plug elements 15a, 15b are each part of a ring element. It is further preferable that each plug element 15a, 15b is shaped such that in certain conditions the plug protruding out of the end of the hollow section 8 is rounded off or chamfered. The part protruding out of the end of the hollow section is preferably nose-shaped.

The invention is by no means limited to above embodiments. Many additional features are possible. For instance, the adapter may have additional openings and/or additional ports, for example to reduce the pressure on a single opening and/or port. The ports may also be oriented tangentially and/or axially, A provision for venting may also be present. In the opening ribs may be present for dividing and/or guiding a flow, as well as for improving the strength of the adapter. The fixating rings may be glued or welded, but also a mechanical fixation may be possible. This applies equally to the recess, in that the recess may comprise two or more recesses, so that pressure and strength of the fluid, respectively the pipe are optimized.

The slide-shaped opening and/or the connector between an end of the fluid connector, particularly when this is in a flexible pipe, and a port 12 of the adapter slit-shaped recess may have a varying width along its length to affect, so as desired the inflow/outflow of fluid along the circumference of the pipe section. Materials used are likely to be of plastic, allowing for welding (electrofusion). However, also mechanical fixing is possible. The adapter may also be provided with a provision for venting. All such embodiments are possible as long as they fall within the framework of the invention as defined by the appended claims.

## Claims

1. System for cooling a flow or for extracting heat out of a flow through a pipeline and/or for extracting heat out of a surrounding of a pipeline, wherein the system comprises: at least two pipe sections (2a, 2b) for forming a part of the pipeline (2), wherein each pipe section (2a, 2b) has a wall defining a lumen and a lumen direction, the wall having attached to a part of the wall a plurality of hollow sections (8) extending in the fluid direction for conducting a fluid; a coupler (4) for coupling the two pipe sections (2a, 2b); and a fluid connector (5) for providing a fluid communication between at least one of the plurality of hollow sections (8) of one of the two pipe sections and at least one of the plurality of hollow sections of the other one of the two pipe sections, wherein the coupler (4) and the fluid connector (5) are in a fully unassembled condition of the system mutually separated and unconnected parts of the system, therewith allowing for sequentially installing the coupler (4) of the system and the connector (5) during assembling, wherein the system is arranged so that when the two pipe sections (2a, 2b) are coupled and a flow of fluid is introduced in a selection of the plurality of hollow sections (8) of one of the two pipe sections (2a, 2b) that flow of the cooling fluid can via the fluid connector be introduced in a selection of the plurality of hollow sections of the other one of the two pipe sections (2a, 2b), wherein at least one of the two pipe sections 2a, 2b) is along at least a part of its circumference provided with a recess (7) for discharge or supply of the fluid, into one or more of the plurality of hollow sections (8) wherein the recess (7) extends over at most a part of the outer circumference of the respective pipe section (2a, 2b), and wherein that recess (7) is free from a fluid communication with another hollow section of the plurality of hollow sections that has a circumferential position outside the part of the circumference over which the recess (7) extends, wherein the system comprises at least one adapter (11a, 11b) for surrounding the recess (7) in a sealed way and for providing a port for connecting a part of the fluid connector (5) for a flow of a fluid downstream from or upstream to one or more of the plurality of hollow sections (8) of one of the pipe sections (2a, 2b) and wherein the adapter (11a, 11b) is provided with an opening (13) positioned such, and extending in a direction such, that in an assembled condition of the system at least one or more of the plurality of hollow sections can via the recess (7) have a fluid communication with the opening (13).

2. System according to claim 1, wherein the recess (7) has the shape of a slit, and wherein preferably the slit has edges which are rounded-off or chamfered.

3. System according to claim 1 or 2, wherein the adapter (11a, 11b) is ring-shaped.

4. System according to claim 1 or 2, wherein the adapter (11a, 11b) has a shape which comprises at most a part of a ring.

5. System according to any one of claims 1-4, wherein the opening (13) is slit-shaped, and wherein preferably the slit-shaped opening has the shape of at least a part of an annulus.

6. System according to claim 5, wherein the length of the slit-shaped opening is adjustable.

7. System according to any one of claims 1-6, wherein the adapter (11a, 11b) is provided with at least one sealing ring (14a, 14b) for abutting a pipe section (2a, 2b) so that in an assembled condition of the system the opening and the recess is fully enclosed by one or more sealing rings.

8. System according to any one of claims 1-7, wherein the adapter (11a, 11b) is provided with a conduit structure which provides in an assembled condition of the system a fluid communication between the recess (7) it surrounds and the port for connecting a part of the fluid connector (5) for a flow of the fluid downstream from, or upstream to, at least one hollow section of one of the pipe sections.

## Patentansprüche

1. System zum Kühlen eines Durchflusses oder zum Entnehmen von Wärme aus einem Durchfluss durch eine Rohrleitung und/oder zum Entnehmen von Wärme aus einer Umgebung einer Rohrleitung, wobei das System umfasst: mindestens zwei Rohrleitungsabschnitte (2a, 2b) zum Bilden eines Teils der Rohrleitung (2), wobei jeder Rohrleitungsabschnitt (2a, 2b) eine Wand aufweist, die ein Lumen und eine Lumenrichtung definiert, wobei an der Wand an einem Teil von dieser eine Vielzahl von Hohlbereichen (8) angebracht ist, die sich zum Leiten eines Fluids in die Fluidrichtung erstrecken; einen Koppler (4) zum Koppeln der zwei Rohrleitungsabschnitte (2a, 2b); und einen Fluidanschluss (5) zum Bereitstellen einer Fluidkommunikation zwischen mindestens einem der Vielzahl von Hohlbereichen (8) von einem der zwei Rohrleitungsabschnitte und mindestens einem der Vielzahl von Hohlbereichen des anderen der zwei Rohrleitungsabschnitte, wobei der Koppler (4) und der Fluidanschluss (5) in einem vollständig zerlegten Zustand des Systems voneinander getrennt sind und nicht verbundene Teile des Systems sind, wodurch ein aufeinanderfolgendes Installieren des Kopplers (4) des Systems und des Anschlusses (5) während des Zusammenbaus ermöglicht ist, wobei das System so angeordnet ist, dass, wenn die zwei Rohrleitungsabschnitte (2a, 2b) gekoppelt sind und ein Durchfluss von Fluid in eine Auswahl von der Vielzahl von Hohlbereichen (8) von einem der zwei Rohrleitungsabschnitte (2a, 2b) eingeleitet wird, dieser Durchfluss der Kühlflüssigkeit über den Fluidanschluss (5) in eine Auswahl der Vielzahl von Hohlbereichen (8) von dem anderen der zwei Rohrleitungsabschnitte (2a, 2b) eingeleitet werden kann, wobei mindestens einer der zwei Rohrleitungsabschnitte (2a, 2b) entlang mindestens eines Teils seines Umfangs mit einer Aussparung (7) zum Entladen oder Zuleiten des Fluids in einen oder mehrere der Vielzahl von Hohlbereichen (8) bereitgestellt ist, wobei sich die Aussparung (7) über höchstens einen Teil des Außenumfangs des jeweiligen Rohrleitungsabschnitts (2a, 2b) erstreckt und wobei die Aussparung (7) frei von einer Fluidkommunikation mit einem anderen Hohlbereich der Vielzahl von Hohlbereichen ist, der eine Umfangsposition außerhalb des Teils des Umfangs aufweist, über den sich die Aussparung (7) erstreckt, wobei das System mindestens einen Adapter (11a, 11b) umfasst zum Umgeben der Aussparung (7) auf abgedichtete Weise und zum Bereitstellen einer Anschlussstelle (12) zum Verbinden eines Teils des Fluidanschlusses (5) für einen Durchfluss eines Fluids stromabwärts von oder stromaufwärts zu einem oder mehreren der Vielzahl von Hohlbereichen (8) von einem der Rohrleitungsabschnitte (2a, 2b), und wobei der Adapter (11a, 11b) mit einer Öffnung (13) bereitgestellt ist, die so positioniert ist und sich in eine solche Richtung erstreckt, dass in einem zusammengebauten Zustand des Systems mindestens einer oder mehrere der Vielzahl von Hohlbereichen (8) über die Aussparung (7) eine Fluidkommunikation mit der Öffnung (13) aufweisen können.

2. System nach Anspruch 1, wobei die Aussparung (7) die Form eines Schlitzes aufweist und wobei der Schlitz vorzugsweise Ränder aufweist, die abgerundet oder abgefast sind.

3. System nach Anspruch 1 oder 2, wobei der Adapter (11a, 11b) ringförmig ist.

4. System nach Anspruch 1 oder 2, wobei der Adapter (11a, 11b) eine Form aufweist, die höchstens einen Teil eines Rings umfasst.

5. System nach einem der Ansprüche 1-4, wobei die Öffnung (13) schlitzförmig ist und wobei die schlitzförmige Öffnung vorzugsweise die Form von mindestens einem Teil eines Kreisrings aufweist.

6. System nach Anspruch 5, wobei die Länge der schlitzförmigen Öffnung regulierbar ist.

7. System nach einem der Ansprüche 1-6, wobei der Adapter (11a, 11b) mit mindestens einem Dichtungsring (14a, 14b) zum Angrenzen an einen Rohrleitungsabschnitt (2a, 2b) so bereitgestellt ist, dass in einem zusammengebauten Zustand des Systems die Öffnung und die Aussparung vollständig von dem einen oder den mehreren Dichtungsringen eingeschlossen sind.

8. System nach einem der Ansprüche 1-7, wobei der Adapter (11a, 11b) mit einer Leitstruktur bereitgestellt ist, die in einem zusammengebauten Zustand des Systems eine Fluidkommunikation zwischen der Aussparung (7), die sie umgibt, und der Anschlussstelle (12) zum Verbinden eines Teils des Fluidanschlusses (5) für einen Durchfluss des Fluids stromabwärts von oder stromaufwärts zu mindestens einem Hohlbereich von einem der Rohrleitungsabschnitte bereitstellt.

## Revendications

1. Système pour refroidir un flux ou pour extraire la chaleur d'un flux dans une canalisation et/ou pour extraire la chaleur hors d'un environnement d'une canalisation, dans lequel le système comprend : au moins deux tronçons de tuyau (2a, 2b) pour former une partie de la canalisation (2), dans lequel chaque tronçon de tuyau (2a, 2b) présente une paroi définissant une lumière et une direction de lumière, la paroi présentant, attachés à une partie de la paroi, une pluralité de tronçons creux (8) s'étendant dans la direction de fluide pour conduire un fluide; un coupleur (4) pour coupler les deux tronçons de tuyau (2a, 2b) ; et un connecteur de fluide (5) pour fournir une communication fluidique entre au moins un de la pluralité de tronçons creux (8) d'un des deux tronçons de tuyau et au moins un de la pluralité de tronçons creux de l'autre des deux tronçons de tuyau, dans lequel le coupleur (4) et le connecteur de fluide (5) sont dans un état totalement non assemblé du système des pièces mutuellement séparées et non connectées du système, permettant avec celui-ci l'installation séquentielle du coupleur (4) du système et du connecteur (5) pendant l'assemblage, dans lequel le système est agencé de façon que lorsque les deux tronçons de tuyau (2a, 2b) sont couplées et qu'un flux de fluide est introduit dans une sélection de la pluralité de tronçons creux (8) d'un des deux tronçons de tuyau (2a, 2b), ce flux du fluide de refroidissement peut, au moyen du connecteur de fluide (5), être introduit dans une sélection de la pluralité de tronçons creux (8) de l'autre des deux tronçons de tuyau (2a, 2b), dans lequel au moins un des deux tronçons de tuyau (2a, 2b) se trouve le long d'au moins une partie de sa circonférence pourvu d'un évidement (7) pour l'évacuation ou l'alimentation du fluide, dans un ou plusieurs de la pluralité de tronçons creux (8) dans lequel l'évidement (7) s'étend sur au maximum une partie de la circonférence externe du tronçon de tuyau (2a, 2b) respectif, et dans lequel cet évidement (7) est dépourvu d'une communication fluidique avec un autre tronçon creux de la pluralité de tronçons creux qui présente une position circonférentielle en dehors de la partie de la circonférence sur laquelle l'évidement (7) s'étend, dans lequel le système comprend au moins un adaptateur (11a, 11b) pour entourer l'évidement (7) d'une manière étanche et pour fournir un orifice (12) pour connecter une partie du connecteur de fluide (5) pour un flux d'un fluide en aval depuis ou en amont jusqu'à un ou plusieurs de la pluralité de tronçons creux (8) d'un des tronçons de tuyau (2a, 2b) et dans lequel l'adaptateur (11a, 11b) est pourvu d'une ouverture (13) positionnée et s'étendant dans une direction de sorte que, dans un état assemblé du système, au moins un ou plusieurs de la pluralité de tronçons creux (8) peut ou peuvent, au moyen de l'évidement (7), présenter une communication fluidique avec l'ouverture (13).

2. Système selon la revendication 1, dans lequel l'évidement (7) présente la forme d'une fente, et dans lequel de préférence la fente présente des bords qui sont arrondis ou chanfreinés.

3. Système selon la revendication 1 ou 2, dans lequel l'adaptateur (11a, 11b) présente une forme d'anneau.

4. Système selon la revendication 1 ou 2, dans lequel l'adaptateur (11a, 11b) présente une forme qui comprend au maximum une partie d'un anneau.

5. Système selon l'une quelconque des revendications 1 à 4, dans lequel l'ouverture (13) présente une forme de fente, et dans lequel de préférence l'ouverture en forme de fente présente la forme d'au moins une partie d'un espace annulaire.

6. Système selon la revendication 5, dans lequel la longueur de l'ouverture en forme de fente est réglable.

7. Système selon l'une quelconque des revendications 1 à 6, dans lequel l'adaptateur (11a, 11b) est pourvu d'au moins une bague d'étanchéité (14a, 14b) destinée à venir en butée contre un tronçon de tuyau (2a, 2b) de sorte que dans un état assemblé du système, l'ouverture et l'évidement se trouvent entièrement contenus par une ou plusieurs bagues d'étanchéité.

8. Système selon l'une quelconque des revendications 1 à 7, dans lequel l'adaptateur (11a, 11b) est pourvu d'une structure de conduit qui fournit, dans un état assemblé du système, une communication fluidique entre l'évidement (7) qu'elle entoure et l'orifice (12) pour connecter une partie du connecteur de fluide (5) pour un flux du fluide en aval depuis, ou en amont jusqu'à, au moins un tronçon creux d'un des tronçons de tuyau.
